# EUROPEAN PATENT SPECIFICATION

(11) **EP 3 814 055 B1**
(45) Date of publication and mention of the grant of the patent: **14.01.2026**
(21) Application number: 18749641.9
(22) Date of filing: 28.06.2018
(51) Int. Cl.: B24D 18/00, C04B 35/528, C04B 35/626, C04B 35/645

(54) **HPHT METHOD COMPRISING LIQUID SEDIMENTATION FOR MAKING POLYCRYSTALLINE DIAMOND CUTTERS**
HOCHDRUCK HOCHTEMPERATURVERFAHREN ENTHALTEND FLÜSSIGKEITSSEDIMENTATION ZU DER HERSTELLUNG VON POLYKRISTALLINE DIAMANTSCHNEIDER
PROCÉDÉ DE FABRICATION HAUTE TEMPÉRATURE- HAUTE PRESSION PAR SÉDIMENTATION D'UN LIQUIDE POUR LA FABRICATION D'UN OUTIL DE COUPE EN DIAMANT

(43) Date of publication of application: 05.05.2021
(73) Proprietor: Diamond Innovations, Inc., Worthington, OH 43085 (US)
(72) Inventor: FLOOD, Gary, Winchester, Ohio 43110 (US)
(74) Representative: Murgitroyd & Company
(86) International application number: PCT/US2018/040029
(87) International publication number: WO 2020/005257

(56) References cited:
- EP-B1- 2 114 620
- US-A1- 2011 252 712
- US-A1- 2017 057 877
- US-B1- 7 951 213

## Description

### TECHNICAL FIELD AND INDUSTRIAL APPLICABILITY

The present disclosure relates generally to a method of making polycrystalline diamond cutters. Specifically, the present disclosure relates to methods of making polycrystalline diamond cutters including diamond particles spatially arranged according to one or more gradients, the methods including at least one liquid sedimentation step.

### BACKGROUND

In the discussion that follows, reference is made to certain structures and/or methods. However, the following references should not be construed as an admission that these structures and/or methods constitute prior art. Applicant expressly reserves the right to demonstrate that such structures and/or methods do not qualify as prior art against the present invention.

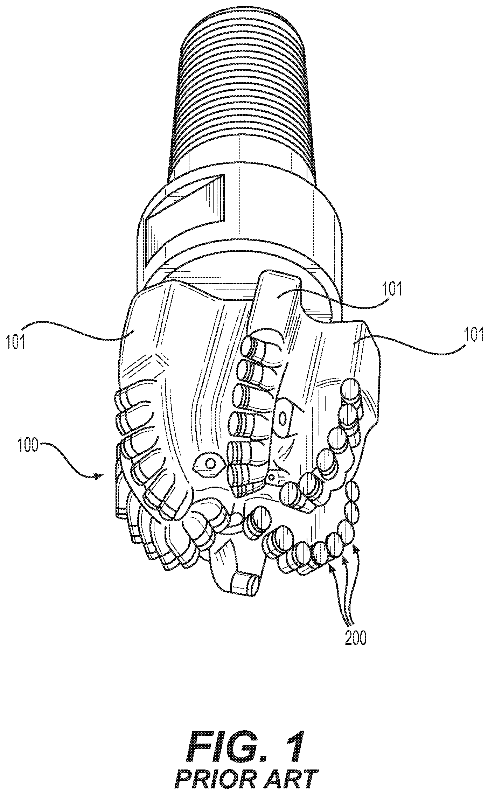

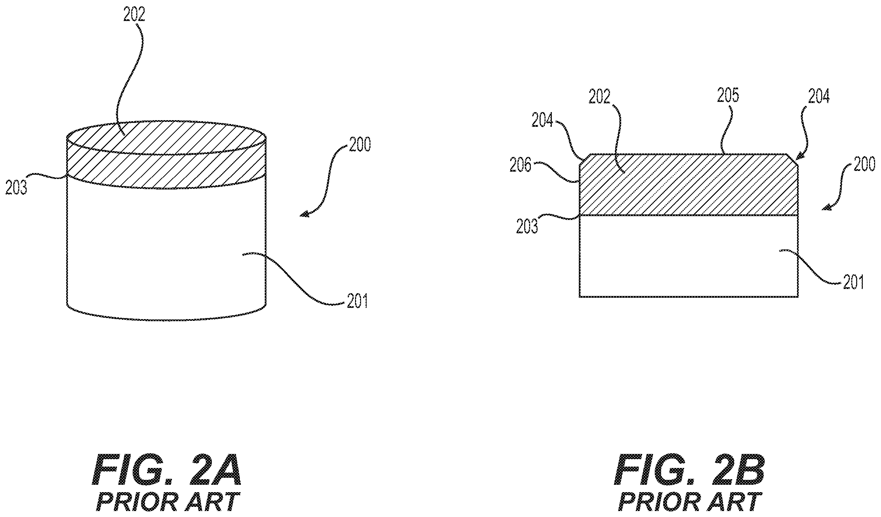

Tools used in the drilling industry, such as drag bit 100 shown in FIG. 1, often incorporate multiple polycrystalline diamond cutters 200 arranged along a peripheral region of a fin or blade 101 of the drag bit 100. A conventional cylindrical shaped polycrystalline diamond cutter 200 is shown in a schematic, perspective view in FIG. 2A and in a side, cross-sectional view in FIG. 2B. The cutter 200 includes an optional substrate 201, which is made of hard metal, alloy, or composite, and most typically of cemented carbide or cobalt sintered tungsten carbide (WC-Co); and a polycrystalline diamond composite volume 202, also called a diamond table or diamond body, attached or joined coherently to the substrate along an interface 203.

Polycrystalline diamond cutters are commonly made using a high pressure and high temperature (HPHT) manufacturing process. In the HPHT manufacturing process, a mass of diamond crystals is placed into a refractory metal container and a cemented carbide substrate is placed in the container such that a surface of the substrate is adjacent to, if not in contact with, the mass of diamond crystals. One or both of the diamond mass and the substrate may contain sintering promoting materials, such as a suitable binder material, additive, or catalyst that promotes sintering of the diamond mass and coherent attachment of the sintered diamond mass to the substrate. When a substrate is present, the binder material of the substrate can act as a catalyst in the diamond powders. Optionally, a catalyst can also be added as a powder or foil adjacent to the diamond particles, between the substrate and the diamond particles and this catalyst can also promote sintering. An example of a sintering promoting material is cobalt. The refractory metal container, including the diamond crystals and the substrate, form an assembly.

The assembly is then subjected to HPHT conditions. Conventional HPHT conditions include pressures at or above about 4-5 GPa, and temperatures at or above about 1200 °C. Typically, under the HPHT processing conditions, the sintering promoting materials melt and sweep through the mass of diamond. In the presence of the sintering promoting materials, diamond crystals are bonded to each other in diamond-to-diamond bonds by a dissolution-precipitation process to form a sintered compact in which a polycrystalline diamond mass, i.e., a diamond table, is formed, and which is attached to the substrate (if present). The presence of the sintering promoting materials facilitates formation of diamond-to-diamond bonds and, where applicable, the attachment of the diamond table to the substrate.

When present in the substrate, e.g., as the binder in the substrate, the sintering promoting material typically melts and propagates into the mass of diamond crystals. Generally, the binder material of the substrate is selected to function as a catalyst for melting and sintering the diamond crystals. That is, in existing processes for forming a polycrystalline diamond cutter, the cobalt or other binder material from the substrate will melt under HPHT conditions and "sweep" from the carbide substrate, into and across the diamond powder to create the polycrystalline diamond cutter. The sweep propagates as a front that moves from an interface between the substrate and the diamond crystals toward a distal surface of the diamond. With reference to FIG. 2B, the front moves from the interface 203, though the body of the polycrystalline diamond composite volume 202, and toward the top surface 205. In the presence of the liquefied binder material, diamond crystals bond to each other by a dissolution-precipitation process to form a polycrystalline diamond mass attached to the cemented carbide substrate.

Upon sintering, the sintering promoting material (such as a catalyst), or chemically distinct residues thereof, remain in the diamond table, and its presence can have various effects on the polycrystalline diamond's overall performance when used in cutting and machining applications. In particular, a nonuniform or incomplete distribution of the catalyst or related residues can have detrimental effects on the mechanical properties of the polycrystalline diamond cutter when used in intended applications, such as drilling geologic formations. A nonuniform or incomplete distribution of the catalyst in the diamond body may, for example, be the result of using diamond particles of various sizes, resulting in interstitial spaces of various sizes and random distribution. Detrimental effects include, for example, a less than average useable lifetime for the polycrystalline diamond cutter as reflected in a faster than average wear, or a higher than average propensity for fracturing of the diamond body.

The polycrystalline diamond cutter 200 may subsequently be machined into a desired shape, including machining to specified outer diameter, height, and/or the addition of various chamfers or beveled surfaces. Examples of chamfers or beveled surfaces 204 can be seen in side view in FIG. 2B, along with other surfaces of the polycrystalline diamond cutter 200, such as the top surface 205, and side surface 206. The working surface or surfaces of the polycrystalline diamond cutter 200 can be any and all portions of the top surface 205, beveled surface 204, and side surface 206, i.e., any surface of the polycrystalline diamond cutter 200 that contacts the geological formation being drilled. EP 2 114 620 discloses a method of creating an abrasive tool comprising an abrasive composite.

### SUMMARY

A method of making a polycrystalline diamond cutter comprising a substrate and a diamond body is provided according to claim 1 herein.

In some embodiments of the method, the suspension is pre-made and poured into the refractory container, while in other embodiments, the suspension is made in the refractory container by pouring diamond particles in the refractory container pre-filled with the liquid. In some embodiments of the method, pouring includes contacting the suspension or the diamond particles with a baffle, for example a baffle which can direct a portion of the suspension or of the diamond particles toward a certain region relative to the refractory container, such as the peripheral region of the refractory container, or a central region of the refractory container. Also, in some embodiments of the method, the process of forming the diamond feed layer further includes subjecting one or more of the suspension and the sedimented diamond particles to a vibration. In some embodiments, the liquid used can include an alcohol, for example ethanol.

In some embodiments of the method, the particle size is the average diameter of the diamond particles. In some embodiments, the average diameter is 2 µm or more. In some embodiments, the average diameter is 250 µm or less.

A portion of the diamond feed layer comprises a plurality of diamond particles arranged according to a gradient along a radius (570) originating at the axis of symmetry (566) such that a majority of diamond particles in a region (568) radially closer to the axis of symmetry (566) have higher average sizes or average diameters comparative to a majority of diamond particles in a region (567) radially closer to a side working surface (565) having lower average sizes or average diameters such that the gradient of particle size decreases in a radial direction from the axis of symmetry (566) toward the working surface (565). As described herein, a plurality of diamond particles can be spatially arranged along a dimension of the layer according to a gradient of particle sizes, for example along the axis of symmetry or along an axis parallel to the axis of symmetry. In some embodiments, the diamond particles sizes can vary (increase or decrease) in a direction toward the bottom of the refractory container.

In some embodiments of the method, the diamond feed layer is formed in the refractory container and the substrate is positioned over the layer, while in other embodiments the substrate is positioned in the refractory container and the diamond feed layer is formed over the substrate.

A polycrystalline diamond cutter including a substrate and a diamond body including bonded diamond crystals and interstitial regions is also described here, the diamond body being generally attached to the substrate along an axis of symmetry, the diamond body including a substrate interface side and a working surface side. A portion of the diamond body includes a plurality of diamond particles spatially arranged along a dimension of the diamond body according to a gradient of particle sizes, for example according to a gradient of average diameters. In some embodiments, the gradient may occur along an axis of symmetry or an axis parallel to the axis of symmetry.

The variations described herein can be uniform or can be modulated. For example, the variation can be a periodic variation of alternating increase and decrease in sizes that provides, when sedimented, a diamond feed layer with alternating layers of diamond sized particles in a multilayer structure.

### BRIEF DESCRIPTION OF THE DRAWINGS

The foregoing summary, as well as the following detailed description of the embodiments, can be better understood when read in conjunction with the appended drawings. It should be understood that the embodiments depicted are not limited to the precise arrangements and instrumentalities shown.
FIG. 1 shows an example of a tool used in the drilling industry, in this case a conventional drag bit.
FIG. 2A shows a schematic perspective view of a conventional cylindrical shaped polycrystalline diamond cutter, and FIG. 2B shows a conventional cylindrical shaped polycrystalline diamond cutter in cross-sectional view, including optional chamfers or beveled surfaces at an edge of the diamond table.

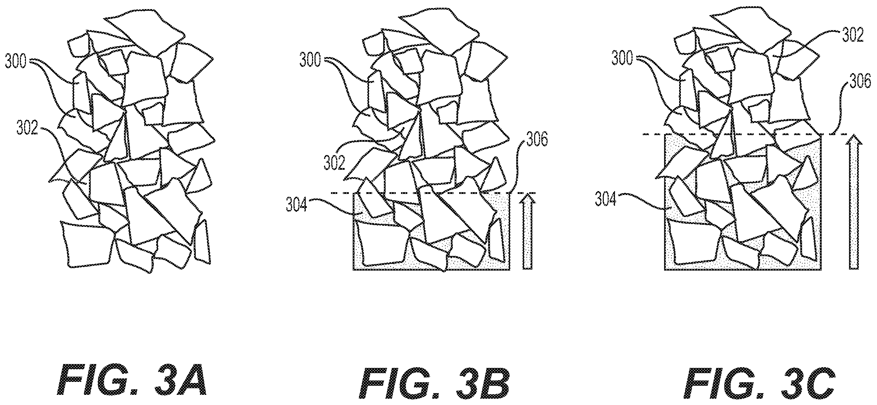

FIGS. 3A-3C are schematic representations of a sweep of molten catalyst material moving through a packed bed of polycrystalline diamond particles.

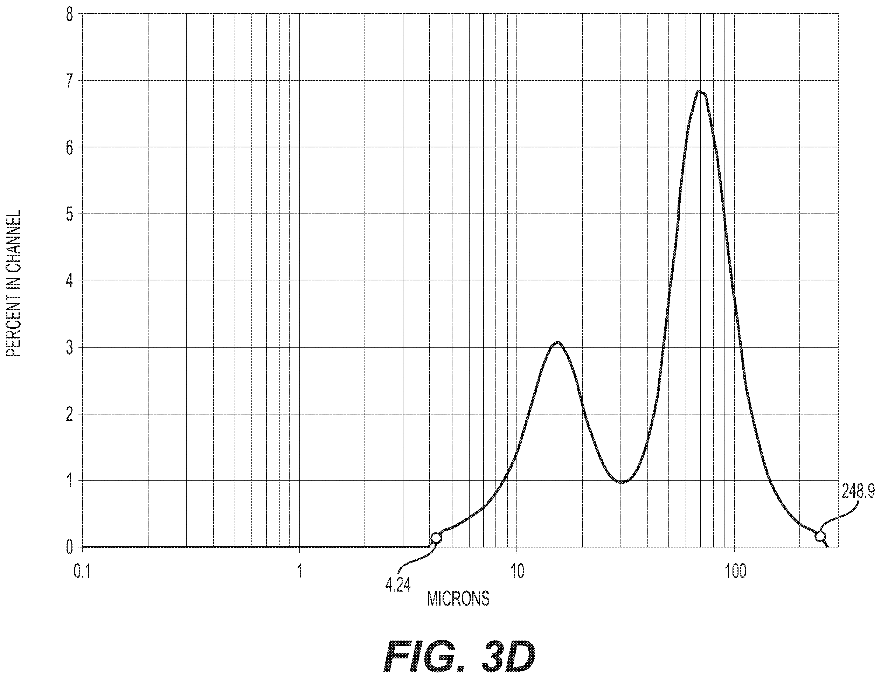

FIG. 3D is a graphical representation of an example of a distribution of diamond particle sizes in a mixture of diamond particles suitable for use in the methods and cutters described herein.

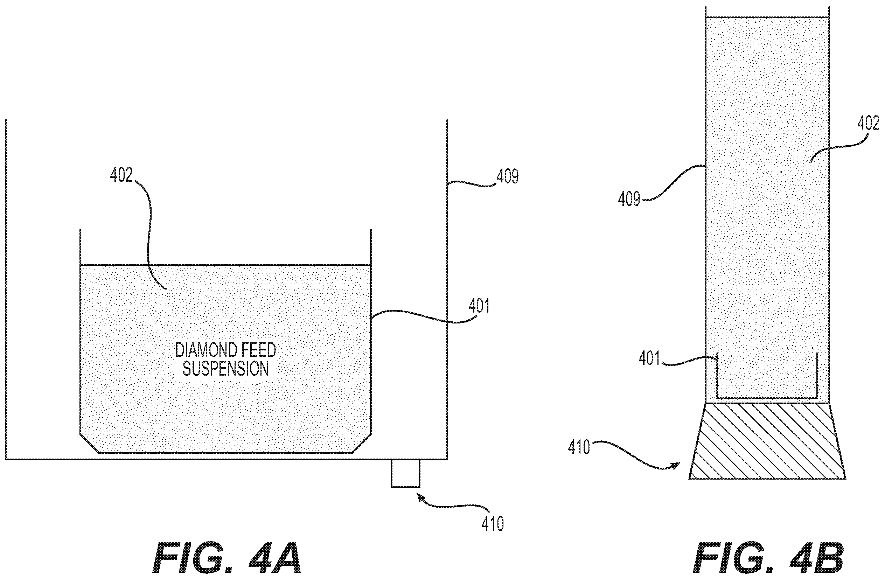

FIGS. 4A-4O, variously, illustrate schematic steps of the methods described herein, including making a suspension of diamond particles in a liquid, with or without using a baffle, allowing sedimentation of the diamond particles, and show a cross-sectional views of various embodiments of assemblies used in a method of making a polycrystalline diamond cutter, the assembly including a refractory container, a diamond feed layer, and a substrate, the diamond feed layer including a gradient of particle sizes along a radius originating at the axis of symmetry, the size of the particles generally decreasing in a direction away from the axis. Although not claimed herein, the diamond feed layer includes a gradient of particle sizes along the axis of symmetry, the size of the particles generally increasing in a direction away from the substrate.

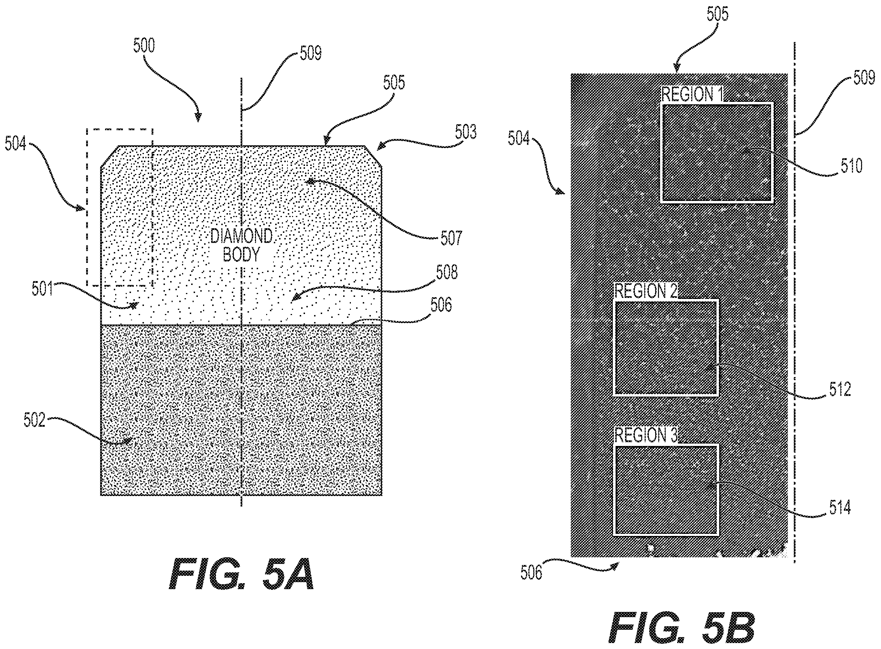

FIG. 5A shows a cross-sectional view of an embodiment not claimed herein of a polycrystalline diamond cutter including a substrate and diamond body, the diamond body including a gradient of particle sizes along the axis of symmetry, the size of the particles generally increasing in a direction away from the substrate.
FIG. 5B shows a SEM image of a cross-section of a diamond body not claimed herein including a gradient of particle sizes along the axis of symmetry, the size of the particles generally increasing in a direction away from the substrate.

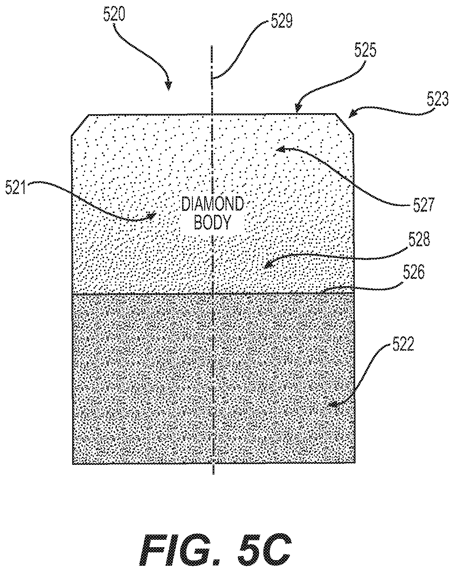

FIG. 5C shows a cross-sectional view of another embodiment not claimed herein of a polycrystalline diamond cutter including a substrate and diamond body, the diamond body including a gradient of particle sizes along the axis of symmetry, the size of the particles generally decreasing in a direction away from the substrate.

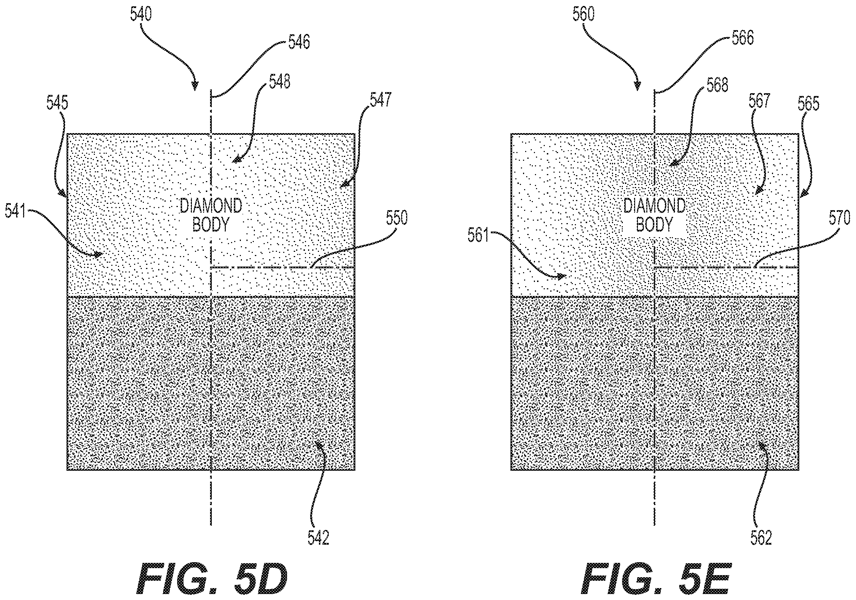

FIG. 5D shows a cross-sectional view of another embodiment not claimed herein of a polycrystalline diamond cutter including a substrate and diamond body, the diamond body including a gradient of particle sizes along a radius originating at the axis of symmetry, the size of the particles generally increasing in a direction away from the axis.
FIG. 5E shows a cross-sectional view of one embodiment of the present invention providing a polycrystalline diamond cutter including a substrate and diamond body, the diamond body including a gradient of particle sizes along a radius originating at the axis of symmetry, the size of the particles generally decreasing in a direction away from the axis.

### DETAILED DESCRIPTION

The disclosure relates to methods of making polycrystalline diamond cutters including diamond bodies including a gradient of particle sizes along a radius. In general, the methods of manufacture include forming an assembly for subsequent high pressure - high temperature (HPHT) processing during which polycrystalline diamond particles, with the aid of a sintering promoting material, such as a catalyst, are consolidated and sintered into a diamond body that is bonded to the substrate.

Without wishing to be bound by any particular theory, it is believed that during HPHT sintering process, a front of molten catalyst material sweeps or moves from an interface between the substrate and the diamond crystals toward a region of the diamond feed layer distally separated from the interface (FIGS. 3A-3C), where distally separated means both spatially separated from and at a distance from a reference location. As shown in FIG. 3A, prior to any movement of molten sintering promoting material from its source, for example, the binder material in the substrate, the compressed diamond crystals 300 are in direct contact with their nearest neighbors as a result of being packed together under high pressure. The packing is not complete because the diamond crystals 300 are resistant to total crushing. The pre-sweep condition therefore includes open spaces 302 between the diamond crystals 300. Such open spaces 302 are subsequently filled with the molten sintering promoting material 304 as the sweep front 306 passes them (See FIGS. 3B and 3C).

As used herein, a "front" refers to the movement of molten sintering promoting material, such as molten catalyst material, through the diamond feed layer, that is, between and around the diamond crystals, filling in the spaces between the diamond crystals (see FIGS. 3B and 3C). It also refers, in some contexts, to a moving boundary between the unfilled spaces and the spaces filled with molten material.

Also without wishing to be bound by any particular theory, it is believed that depending on various conditions such as the size of the diamond particles, the variation in the size of the diamond particles, or because of the particular nature of the sintering promoting material and/or the diamond particles, the front can be uniform, or non-uniform. As used herein, and without wishing to be bound by any particular theory, the uniformity of a sweep front relates to the speed at which the molten sintering promoting material or the boundary or interface between molten and non-molten sintering promoting material advances through the assembly and the components located within the assembly. For example, a non-uniform front may result when the front travels through a bed of diamond particles of various sizes. As shown in FIG. 3D, a mixture of diamond particles used to make a polycrystalline diamond cutter can include diamond particles having a minimum average diameter of about 4.24 µm. In some embodiments, polycrystalline diamond cutters can include diamond particles having minimum average diameters of about 4 µm, about 3 µm, or about 2 µm. As shown in FIG. 3D, a mixture of diamond particles used to make a polycrystalline diamond cutter can include diamond particles having a maximum average diameter of about 248.9 µm. In some embodiments, polycrystalline diamond cutters can include diamond particles having maximum average diameters of about 248 µm, about 249 µm, or about 250 µm. Without wishing to be bound by any particular theory, it is believed that having to travel through a bed of diamond particles with sizes varying as shown in FIG. 3D, the front will accordingly move through interstitial spaces of different sizes, and thus become nonuniform in certain embodiments.

Also without wishing to be bound by any particular theory, it is believed that polycrystalline diamond cutters used in the oil and gas drilling industry and including particles of various sizes, typically have one or more layers of distinct diamond particle size distributions within the diamond body. Such a structure provides opportunity for crack propagation upon application of stress loading, leading to failure of the cutters and hence of the drill bit. In some embodiments, the existence of distinct layers results in regions of distinct coefficients of thermal expansion, and/or regions of distinct residual stresses from the HPHT process.

Also without wishing to be bound by any particular theory, it is believed that as a result of a nonuniform front or front propagation, but also as a result of including diamond particles of various sizes randomly distributed throughout, the sintered diamond body may include structural differences between the various parts thereof, differences resulting in nonuniform mechanical performance of the various parts of the diamond body. For example, the diamond body may include portions where the sweep did not reach the diamond feed layer throughout, resulting in incomplete sintering or resulting in gaps between the diamond particles. Or the diamond body may include portions having large size variations between adjacent particles, or interstitial spaces. As a result, such portions have a higher rate of wear and a higher propensity to fracture compared to the rest of the diamond body.

Thus, it is beneficial to have a sweep-through HPHT sintering method to alleviate the non-uniformity of size variation. The method includes steps for ordering a mixture of diamond particles of various sizes in a presintering diamond feed layer where the particles are arranged according to a size gradient. The method includes the sedimentation of diamond particles of various sizes from a temporary suspension of the particles in a liquid. Without wishing to be bound by any particular theory, it is believed that by arranging the diamond particles according to a smooth size gradient, the resulting diamond bodies include one or more of a gradient of metal content within the diamond layer, a gradient of coefficient of thermal expansion, and/or a gradient of residual stresses from the HPHT process.

In some embodiments, a method described herein includes forming a diamond particles feed layer by a process that includes i) making a temporary suspension of diamond particles in a liquid; ii) allowing sedimentation of the diamond particles; and iii) removing the liquid; then forming an assembly including a refractory container, the diamond particles feed layer, and a substrate; and processing the assembly under high pressure high temperature sintering conditions (HPHT) from 5 GPa to 8 GPa and from 1300 °C to 1600 °C to sinter the diamond feed layer into a diamond body affixed to the substrate. As a result of the sedimentation techniques described herein, a portion of the diamond feed layer comprises a plurality of diamond particles arranged according to a gradient along a radius (570) originating at the axis of symmetry (566) such that a majority of diamond particles in a region (568) radially closer to the axis of symmetry (566) have higher average sizes or average diameters comparative to a majority of diamond particles in a region (567) radially closer to a side working surface (565) having lower average sizes or average diameters such that the gradient of particle size decreases in a radial direction from the axis of symmetry (566) toward the working surface (565).

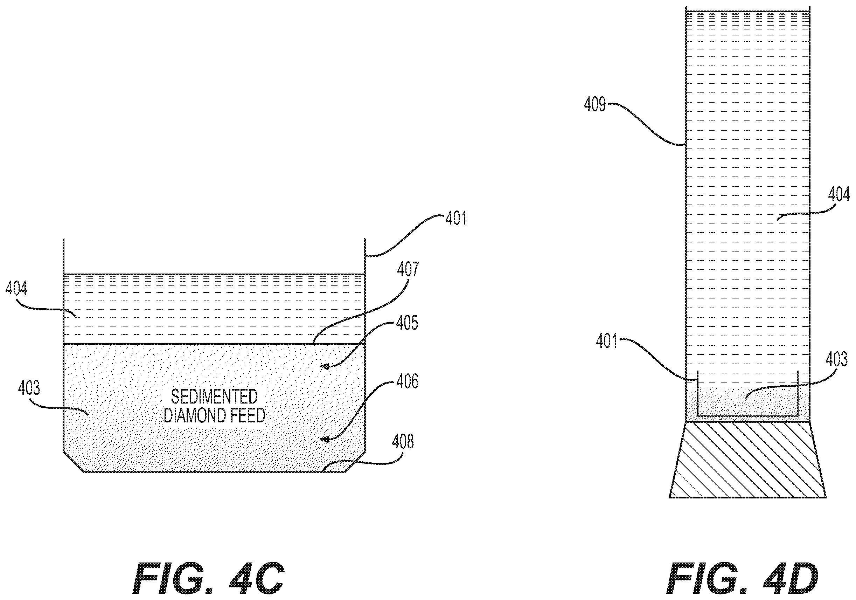

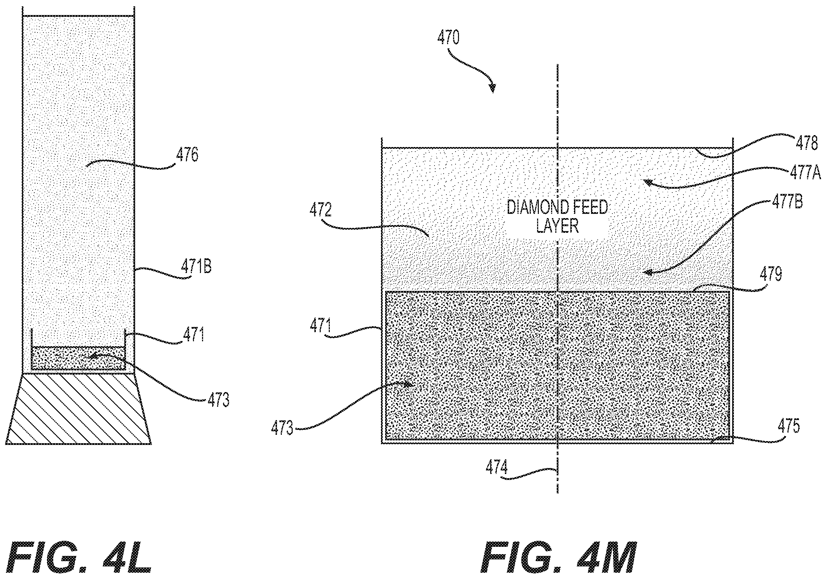

Example sedimentation techniques are shown in FIGS. 4A-4J, 4L, and 4M. For example, and as shown in FIGS. 4A-4D, a diamond feed suspension 402 is poured, or made in-situ, in a refractory container 401. The refractory container may optionally be placed in an outer container 409, and the suspension 402 poured, or made in-situ, in refractory container 401 or in optional outer container 409 that includes refractory container 401. If optional outer container 409 is used, it may be fitted with an open/close drain or stopper 410 allowing for removal of excess suspension 402, or removal of the clear liquid 404 after sedimentation (FIGS. 4C and 4D). In some embodiments, container 401 can remain within drained outer container 409 for further processing. As shown in FIGS. 4C and 4D, with respect to filled refractory container 401, after a period of time, the diamond particles in the suspension 402 will be sedimented into a layer 403, leaving a layer of liquid 404 above. Both the layer of liquid 404, and the residual liquid in sedimented diamond layer 403, can be removed by any suitable method, for example by heating, syphoning, draining, pipetting, etc.

The liquid in the suspension 402 can be any suitable liquid that will wet the diamond particles, but yet be easily removable. In some embodiments, the liquid is an alcohol, or an alcohol mixture, for example ethanol denatured with methanol. In still other embodiments, the refractory container 401 including the suspension 402, and/or the optional container 409, can be stoppered by any suitable means, and the refractory container can be subjected to a vibration of variable frequency. For example, a high frequency vibration, or a low frequency shake can be applied.

Thus, the term "gradient" refers to a change in the size of diamond particles as a function of position and refers to the fact the spatial region where a gradient of particle sizes is present does not include a boundary between portions of the diamond feed layer, or of the diamond body formed from a diamond feed layer with such a gradient. In some embodiments, the change in size occurs over a spatial region of the diamond feed layer as included in an assembly formed as described herein. In other embodiments, the change in size occurs over a spatial region of a diamond body included in a polycrystalline diamond cutter as described herein. Thus, the term "gradient" refers to a no-boundary change in the size of diamond particles, either in a diamond feed layer, or a diamond body. In some embodiments, the gradient may be continuous as a function of spatial position along a particular direction, i.e., a radius of the diamond feed layer or of the diamond body formed from a diamond feed layer.

Throughout this disclosure, schematic graphical representations of diamond feed layers include darker areas representing that the region includes a majority of larger diamond particles, and lighter areas representing that the region includes a majority of smaller diamond particles. For example, as shown in FIG. 4C relative to the sedimented diamond feed layer 403, a majority of diamond particles in a region 405 closer to the top surface 407 of the diamond feed layer will have lower average sizes or average diameters comparative to a majority of diamond particles in a region 406 closer to the bottom surface 408 of the diamond feed layer.

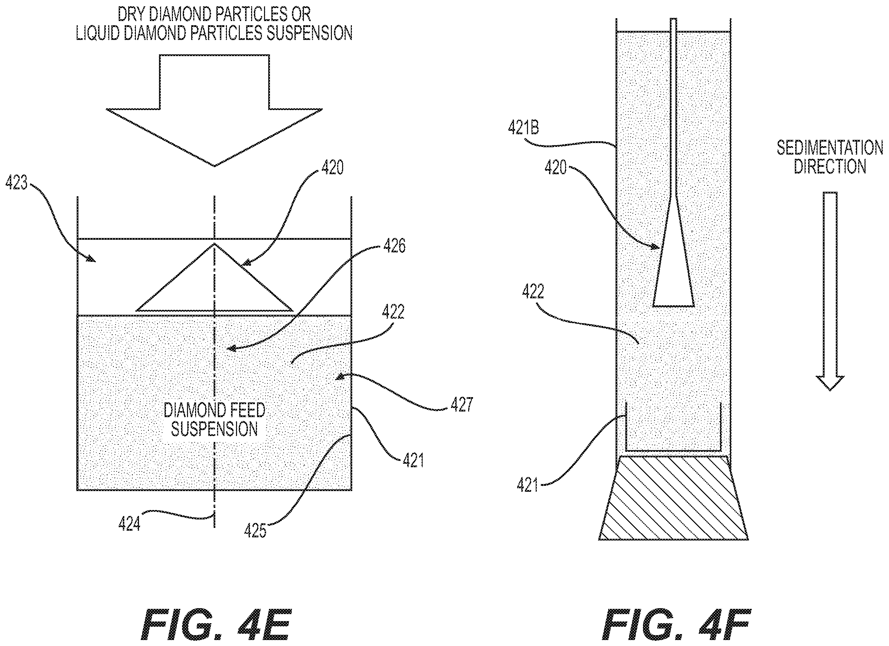

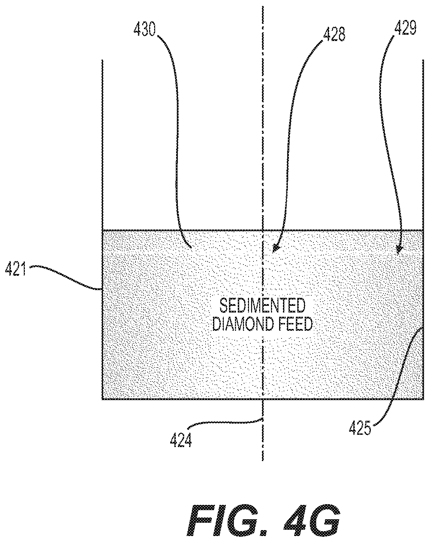

An alternate sedimentation technique and resulting sedimented diamond feed layer is shown in FIGS. 4E, 4F, and 4G. This technique involves the use of a triangular-shaped, a cone-shaped, or an umbrella-like baffle 420. As shown in FIGS. 4E and 4F, in some embodiments, a liquid 423 is placed in the refractory container 421, or in optional container 421B, and the baffle 420 is positioned in the column of liquid, either above or below the surface. A mixture of dry diamond particles of various sizes is then poured on top of the baffle 420 and into the liquid 423 to create a suspension 422. In some alternate embodiments, the baffle 420 is positioned over the empty refractory container 421, or empty container 421B, and a pre-made diamond particles liquid suspension 422 is poured over the baffle and into the refractory container 421, or into the container 421B. In general, the baffle 420 will be positioned coaxially to the refractory container 421 along the axis of symmetry 424. Without wishing to be bound by any particular theory, it is believed that baffle 420, by directing the diamond particles or suspension away from the axis of symmetry 424, will cause the diamond particles to be sedimented differentially with respect to the axis of symmetry. For example, larger particles may be prone to follow a more straightforward trajectory outwardly and downwardly, and as a result higher numbers of larger particles will be suspended in a region 427 closer to the inner walls 425 of the refractory container 421. At the same time, smaller particles may not follow a straightforward trajectory, and float more freely through the suspension and occupy a larger portion of region 426 extending along the axis of symmetry 424 and underneath the baffle 420.

The resulting sedimented diamond feed layer 430 is as shown in FIG. 4G. In some embodiments, the sedimented diamond feed layer 430 can include diamond particles arranged according to a gradient. According to a non-claimed example, the sedimented diamond feed layer 430 can include a majority of diamond particles having larger sizes or average dimeters in a region 429 closer to the inner walls 425 of refractory container 421, comparative to a majority of diamond particles having smaller sizes or average diameters in a region 428 closer to the axis of symmetry 424.

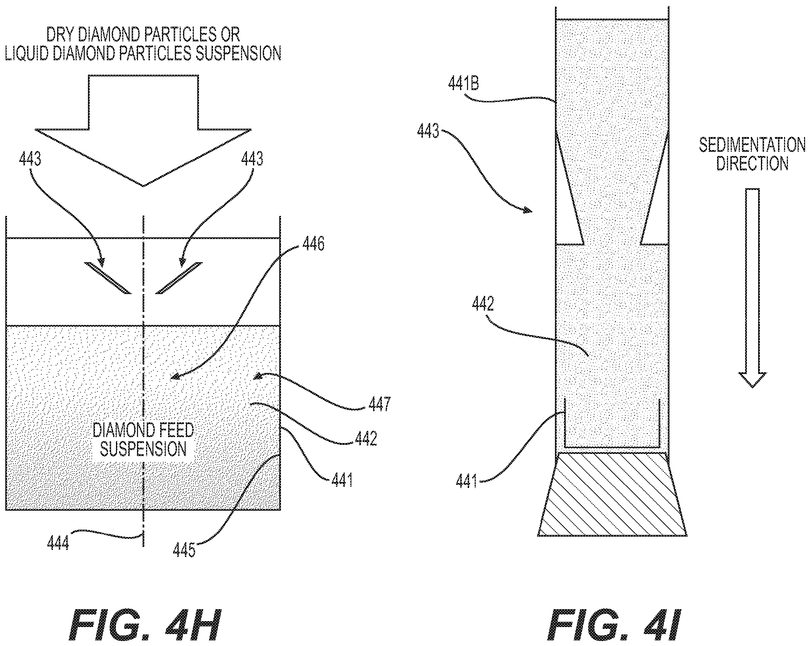

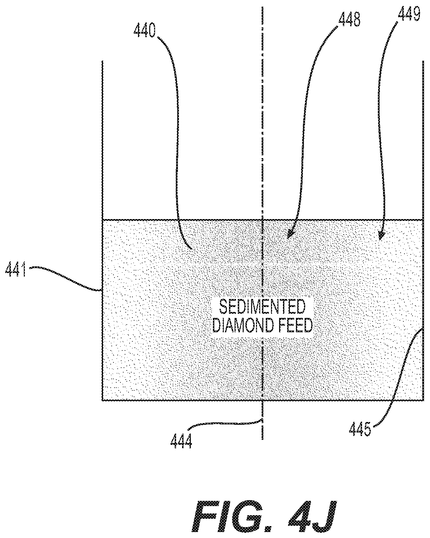

An additional sedimentation technique and resulting sedimented diamond feed layer is shown in FIGS. 4H, 4I, and 4J. This technique involves the use of a funnel-like baffle 443, funnel like in that it has inward and downward converging surfaces leading to an opening. As shown in FIGS. 4H and 4I, in some embodiments, a liquid is placed in the refractory container 441, or optional container 441B, and the baffle 443 is positioned near the top surface of the liquid, either above or below the surface. A mixture of dry diamond particles of various sizes is then poured on top of the baffle 443 and into the liquid to create a suspension 442. In some alternate embodiments, the baffle 443 is positioned over the empty refractory container 441, or empty optional container 441B, and a pre-made diamond particles liquid suspension 442 is poured over the baffle and into the refractory container 441, or into optional container 441B. In general, the baffle 443 will be positioned coaxially to the refractory container 441 along the axis of symmetry 444. Without wishing to be bound by any particular theory, it is believed that baffle 443, by directing the diamond particles or suspension toward the axis of symmetry 444, will cause the diamond particles to be sedimented differentially with respect to the axis of symmetry, According to the invention, larger particles may be prone to follow a more straightforward trajectory downward toward the bottom of the container 441, and as a result higher numbers of larger particles will be suspended in a region 446 closer to the axis of symmetry 444 and underneath the baffle 443. At the same time, smaller particles may not follow a straightforward trajectory, and float more freely through the suspension and occupy a larger portion of region 447 extending along the inner walls 445 of the refractory container 441.

The resulting sedimented diamond feed layer 440 is as shown in FIG. 4J. The diamond feed layer 440 includes diamond particles arranged according to a gradient. Specifically, the diamond feed layer 440 includes a majority of diamond particles having larger sizes or average dimeters in a region 448 closer to the axis of symmetry 444, comparative to a majority of diamond particles having smaller sizes or average diameters in a region 449 closer to the inner walls 445 of the refractory container 441.

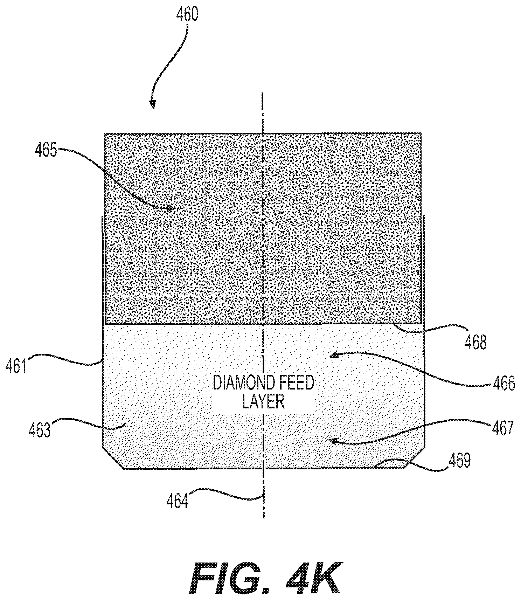

An assembly 460, 470, 480, or 490 can be formed in one of several ways, as variously schematically represented in FIGS. 4K-4O, including using a refractory container 461, 471, 481, 491. A refractory container 461, 471, 481, 491 is typically made from a refractory alloy including one or more metals such as tantalum (Ta), niobium (Nb), molybdenum (Mo), and/or zirconium (Zr). In some embodiments, tantalum is a preferred material. The refractory container 461, 471, 481, 491 can be made by any suitable method. In some embodiments, the refractory container is seamless and is formed by a sheet metal forming process that includes a drawing operation, for example deep drawing.

As shown in FIG. 4K, a layer of diamond feed 463 formed as described herein by a liquid sedimentation step is at the bottom of a refractory container 461. In some embodiments, not claimed herein, the diamond feed layer 463 is distributed in a layer of between 1 mm and 5 mm thickness. A substrate 465 is thereafter placed above the diamond feed layer.

Owing to the liquid sedimentation step described herein, the diamond feed layer 463 includes diamond particles of variable size, and arranged according to a gradient along the axis of symmetry 464. For example, as shown in FIG. 4K relative to the sedimented diamond feed layer 463, a majority of diamond particles in a region 466 closer to the interface 468 between the diamond feed layer 463 and the substrate 465, will have lower average size or average diameters comparative to a majority of diamond particles in a region 467 closer to the bottom surface 469 of the refractory container.

In an alternate embodiment not claimed herein, described in FIGS. 4L and 4M, an assembly 470 can be made by placing a substrate 473 inside a refractory cup 471 and an optional container 471B, and then forming a diamond feed layer 472 above the substrate. The diamond feed layer 472 can be made by a sedimentation step as described herein. For example, a liquid diamond particles suspension 476 can be formed in-situ or poured in the refractory cup 471 already containing the substrate 473. Owing to the liquid sedimentation steps described herein, the resulting diamond feed layer 472 includes diamond particles of variable size, and arranged according to a gradient along the axis of symmetry 474. For example, as shown in FIG. 4M relative to the sedimented diamond feed layer 473, a majority of diamond particles in a region 477B closer to the interface 479 between the diamond feed layer 472 and the substrate 473, will have higher average size or average diameters comparative to a majority of diamond particles in a region 477A closer to the top surface 478 of the diamond feed layer. In some embodiments, the diamond feed layer 472 is distributed in a layer of between 1 mm and 5 mm thickness.

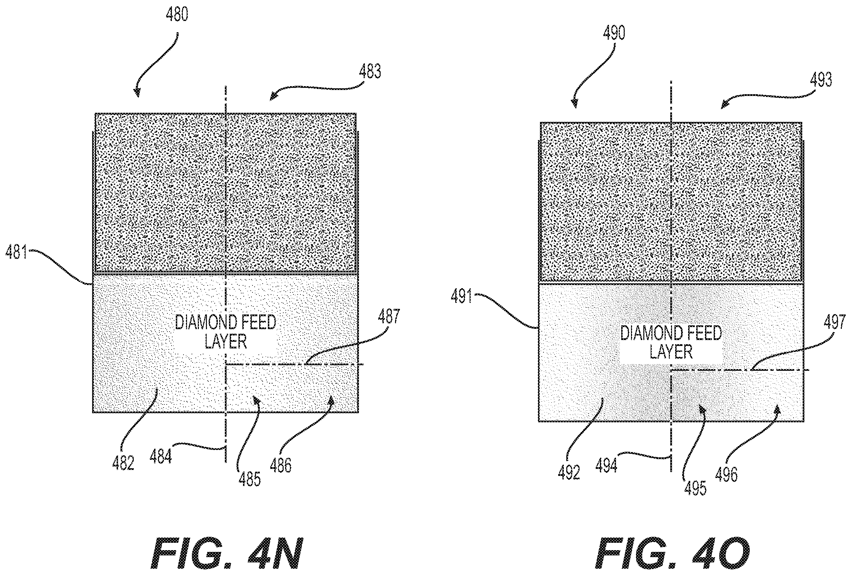

In another alternate embodiment not claimed herein and described in FIG. 4N, an assembly 480 can be formed including using a refractory container 481, a diamond feed layer 482 made as described herein in (for example, as shown and described with respect to FIGS. 4E and 4F and by using a baffle), and a substrate 483 placed above the diamond feed layer 482. In some embodiments, the diamond feed layer 482 is distributed in a layer of between 1 mm and 5 mm thickness. Owing to the liquid sedimentation step described herein, the diamond feed layer 482 includes diamond particles of variable size, and arranged according to a gradient along the radius 487 originating at the axis of symmetry 484. For example, as shown in FIG. 4N relative to the diamond feed layer 482, a majority of diamond particles in a region 486 radially away from the axis of symmetry 484 will have higher average size or average diameters, comparative to a majority of diamond particles in a region 485 radially closer to the axis of symmetry 484 having lower average sizes or average diameters.

In an embodiment of the present invention described in FIG. 4O, an assembly 490 can be formed including using a refractory container 491, a diamond feed layer 492 made as described herein in FIGS. 4H and 4I by using a funnel-like baffle, and a substrate 493 placed above the diamond feed layer. In some embodiments, the diamond feed layer 492 is distributed in a layer of between 1 mm and 5 mm thickness. Owing to the liquid sedimentation step described herein, the diamond feed layer 492 includes diamond particles of variable size, and arranged according to a gradient along the radius 497 originating at the axis of symmetry 494. For example, as shown in FIG. 4O relative to the diamond feed layer 492, a majority of diamond particles in a region 496 radially away from the axis of symmetry 494 will have lower average sizes or average diameters comparative to a majority of diamond particles in a region 495 radially closer to the axis of symmetry 494 having higher average sizes or average diameters.

All substrates described herein can be any suitable substrates that can be processed in the high pressure - high temperature sintering environment used to consolidate and sinter the polycrystalline diamond particles into the diamond body and to bond the diamond body to the substrate. For example, the composition of the substrate typically includes a catalyst. In exemplary embodiments, the substrate is a hard metal alloy or composite, a cemented carbide, or cobalt sintered tungsten carbide (WC-Co). In some embodiments, the substrate is or includes cobalt sintered tungsten carbide and has a composition of 8-15 wt.% cobalt and 85-92 wt.% tungsten carbide and, optionally, 0.3-2.5 wt.% chromium.

In general, the substrate can be manufactured to final shape or near final shape prior to use in the high pressure - high temperature manufacturing operation. For example, the substrate can be formed substantially in the shape of a solid body, such as any type of cylinder or any type of polyhedron. The final shape of the substrate can be formed at the green body stage, or the substrate can be machined to final form.

The method according to the invention includes a solid catalyst foil positioned adjacent to the diamond particles, between the substrate and the diamond particles prior to the step of processing the assembly to sinter the diamond particle feed layer into a diamond body. The foil is placed at the bottom of the substrate opposite the diamond feed layer-substrate interface. A typical catalyst solid is a cobalt or cobalt alloy metal disc. The metal body is in direct contact with a portion of the diamond feed, and during the HPHT processing sweeps along an axis of the assembly through the diamond feed layer. This typically occurs prior to the binder sweep from the substrate. The infiltration of catalyst metal from two sources - binder in the substrate and catalyst in foil or disc - contributes to attachment of the diamond body to the substrate. The catalyst solid can be incorporated into any of the assemblies disclosed herein.

Any of the assemblies described herein can be sealed prior to the HPHT process. Sealing can be by any suitable means that secures the components and contents in the refractory container. For example, portions of the ends of the cup can be crimped over the substrate surface. Also for example, a cap, typically of the same material as the refractory container, can optionally be placed over the formed assembly, to cover the contents of the refractory container before sealing. Thus, portions of the container itself (or the container and the cap, if present) can be crimped or otherwise pressed together so as to seal the components and form an assembly. When used, the cap can be a disc or foil or similar planar structure that is placed over the opening of the container and its content, and then the peripheral edge of the cap and the peripheral edge of the opening of the container are crimped or otherwise pressed together or folded over so as to seal the cap and the container to form a capped assembly. The cap is typically of the same material as the refractory container, e.g., tantalum.

Assemblies formed as described herein are processed under high pressure - high temperature (HPHT) processing conditions. One or more assemblies are loaded into a cell for high pressure - high temperature (HPHT) processing. Generally, the cell includes a gasketing material which transmits pressure and retains the contents of the cell under pressure, a heating element, the assemblies, and insulating materials. An example of a suitable cell is disclosed in U.S. Patent No. 4,807,402,. The cell is then subjected to high pressure - high temperature (HPHT) processing conditions sufficient to consolidate and sinter the diamond feed into a diamond body that is bonded to the substrate. An example of suitable HPHT processing conditions includes pressures in the range of about 5 GPa to about 10 GPa and temperatures in the range of about 1100 °C to about 2000 °C for times up to 20-30 minutes. Conditions according to the claimed method fall within 5 GPa to 8 GPa and from 1300 °C to 1600 °C, optionally for about 12-18 minutes.

The HPHT sintering methods described herein include a sweep-through step of molten catalyst through the diamond feed layer, the sweep including a front of catalyst generally moving from the interface between the substrate and the diamond feed layer, toward the bottom of the refractory container. As described herein, the diamond feed layer includes gradients of diamond particle sizes, the gradients extending along a radius of the diamond feed layer extending from the axis of symmetry, and optionally along the axis of symmetry of the assembly including the diamond feed layer.

The methods described herein can further include finishing steps or finish machining of the diamond body to final form. Such processing can include finish wire shaping or grinding of the surfaces of the diamond body, lapping or grinding of the diamond body to planarize some portions of the top surface of the diamond body, grinding to add a bevel or chamfer to the diamond body and/or substrate, rotational grinding to finish grind the cylindrical sides of the cutter, and leaching of the catalyst in one or more portions of the diamond body. In some embodiments, the methods include finish machining the diamond body. In some embodiments, finish machining includes one or more of laser cutting, electrical discharge machining, grinding, lapping, and polishing.

In some embodiments, the method further includes leaching a portion of the sintered diamond body to form interstitial regions substantially free of catalyst material or sintering residue thereof. Interstitial regions are microstructural features of the sintered diamond body that refers to the spaces within the matrix phase of the sinter bonded polycrystalline diamond material typically occupied by a catalyst material like Co and/or fillers upon formation of the sintered diamond body using HPHT techniques and which form empty spaces, pores or voids as a result of the catalyst material being removed therefrom in, for example, a subsequent leaching step. In some embodiments, the diamond body portion including interstitial regions substantially free of catalyst material or sintering residue thereof extends from a working surface into an interior volume of the diamond body. Removal of catalyst from the diamond body, particularly from portions of the diamond body that act as a working surface of the polycrystalline diamond cutter leaves interconnected network of pores and a residual catalyst (up to 10 vol.%) trapped inside the polycrystalline diamond body. In some embodiments, the removal of catalyst, such as cobalt, from diamond bodies improves abrasion resistance of the diamond body. Such leaching can occur in at least a portion of the diamond body and renders the diamond body in that portion substantially free of catalyst material. Leaching can occur, for example, by chemical etching in acids in which portions to be leached are exposed to an acid or a mixture of acids, such as aqua regia, for a period of time sufficient to dissolve the catalyst material to a depth from the surface of the diamond body. The time varies by strength of acid, temperature and pressure as well as the desired depth. Exemplary depths from which the catalyst material has been removed range from 50 microns to 800 microns, alternatively less than 300 microns or less than 200 microns or less than 100 microns. Also, for example, the depth may be at least half of the overall thickness of the diamond body, but the depth is no closer to the interface between the lower side of the diamond body and the upper side of the substrate than about 200 microns. Descriptions of leaching and of leached polycrystalline diamond cutters are contained in, for example, U.S. Patent No. 4,224,380; U.S. Patent No. 6,544,308 and U.S. Patent No. 8,852,546,. In some non-claimed embodiments, a polycrystalline diamond cutter includes a substrate and a diamond body including bonded diamond crystals and interstitial regions. The diamond body is generally attached to the substrate along an axis of symmetry, the diamond body including a substrate interface side and a working surface side. In non-claimed embodiments, a portion of the diamond body includes a plurality of diamond particles spatially arranged along a radius of the diamond body according to a gradient of particle sizes, for example according to a gradient of average diameters.

An exemplary polycrystalline diamond cutter 500 is shown in FIG. 5A although not claimed herein. The cutter includes (along an axis 509) a substrate 502, and a diamond body 501. In some embodiments, the diamond body 501 includes diamond particles of variable size, and arranged according to a gradient along the axis of symmetry 509. For example, as shown in FIG. 5A relative to the diamond body 501, a majority of diamond particles in a region 507 closer to the working surface 505, has higher average sizes or average diameters comparative to a majority of diamond particles in a region 508 closer to the interface 506 between the diamond body and the substrate 502. The diamond body 501 can include optional chamfered or beveled surfaces 503.

The differences in diamond particle sizes relative to their position in the diamond body 501 can be seen in the photo detail 504 (FIGS. 5A and 5B), showing a cross section of a diamond body manufactured as described herein. For example, in Regions 1 to 3 aligned along axis 509 from the working surface of the diamond body toward the substrate, various size particles can be observed. In Region 1 (510), which is the closest to the working surface of the diamond body, a majority of diamond particles are larger than the particles in Regions 2 (512) and 3 (514). In Region 2, which is in a relatively median portion of the diamond body 501 between the working surface 505 and the interface 506 with the substrate 502, a majority of the diamond particles are larger than the particles in Region 3, but smaller than the particles in Region 1. And in Region 3, which is closest to the interface 506 between the diamond body 501 and the substrate 502, a majority of the diamond particles are smaller than both the particles in both Region 1 and 2.

In some embodiments, creating a gradient of diamond particle sizes as described herein, creates a counter gradient of interstitial materials, which are largely catalyst materials or catalyst material residues left from the HPHT process. The chemical composition of the diamond body at any given position can be characterized for example by Energy-dispersive X-ray spectroscopy, the chemical composition being representative of the balance between diamond particles and interstitial materials (diamond particles are almost exclusively made of carbon, while interstitial materials are largely various metals; see Table 1).

**Table 1:**

| **Chemical Element** | **Region 1 (wt%)** | **Region 2 (wt%)** | **Region 3 (wt%)** |
|---|---|---|---|
| Carbon | 94.74 | 91.99 | 89.57 |
| Cobalt | 3.86 | 5.71 | 7.41 |
| Tungsten | 1.19 | 2.09 | 2.74 |
| Chromium | 0.21 | 0.21 | 0.28 |
| Total | 100.00 | 100.00 | 100.00 |

An alternate polycrystalline diamond cutter 520 is shown in FIG. 5C although not claimed herein. The cutter includes (along an axis 529) a substrate 522, and a diamond body 521. In some embodiments, the diamond body includes diamond particles of variable size, and arranged according to a gradient along the axis of symmetry 529. For example, as shown in FIG. 5C relative to the diamond body 521, a majority of diamond particles in a region 527 closer to the working surface 525, has lower average sizes or average diameters comparative to a majority of diamond particles in a region 528 closer to the interface 502 between the diamond body and the substrate 522. The diamond body can include optional chamfered or beveled surfaces 523.

Another alternate polycrystalline diamond cutter 540 is shown in FIG. 5D although not claimed herein. The cutter includes (along an axis 546) a substrate 542, and a diamond body 541. In some embodiments, the diamond body 541 includes diamond particles of variable size, and arranged according to a gradient along the radius 550 originating at the axis of symmetry 546. For example, as shown in FIG. 5D relative to the diamond body 541, a majority of diamond particles in a region 548 radially closer to the axis of symmetry 546 has lower average sizes or average diameters comparative to a majority of diamond particles in a region 547 radially closer to a side working surface 545 having higher average sizes or average diameters.

An exemplary polycrystalline diamond cutter 560 made according to the present claimed method, is shown in FIG. 5E. The cutter includes (along an axis 566) a substrate 562, and a diamond body 561. The diamond body 561 includes diamond particles of variable size, and arranged according to a gradient along the radius 570 originating at the axis of symmetry 566. For example, as shown in FIG. 5E relative to the diamond body 561, a majority of diamond particles in a region 568 closer to the axis of symmetry 566 has higher average sizes or average diameters comparative to a majority of diamond particles in a region 567 closer to a side working surface 565 having lower average sizes or average diameters.

The features and geometry of the substrate and the diamond body that form the polycrystalline diamond cutter can vary, and the various embodiments of the polycrystalline diamond cutter can be further processed to final form. Such processing can include finish wire shaping or grinding of the surfaces of the passage, lapping or grinding of the diamond body to planarize the top surface of the grinder, grinding to add a bevel or chamfer to the diamond body and/or substrate, rotational grinding to finish grind the cylindrical sides of the cutter, and leaching of the catalyst in one or more portions of the diamond body.

In some embodiments, further processing includes machining along various surfaces, including planar, cylindrical, or hyperboloid surfaces. For example, a diamond cutter can be machined to: i) reduce the height of the substrate; ii) reduce the overall diameter and/or circumference of the cutter; iii) reduce the height of the diamond body; and/or iv) add chamfered and/or beveled surfaces by machining along a frustum of cone.

The beveled or chamfered surfaces described herein can have any size. In some embodiments, the beveled or chamfered surface may have a vertical height, i.e., length in the axial direction, of 0.5 mm to about 1 mm and an angle of 45 degrees which may provide a particularly strong and fracture resistant tool component. In some embodiments, the beveled or chamfered surface has a vertical height, i.e., length in the axial direction, which is the same as the thickness, i.e., axial thickness, of the planar oriented portion.

In some embodiments, the diamond bodies described herein include a plurality of bonded diamond crystals and a plurality of interstitial regions. The composition of diamond bodies described herein includes sintered diamond particles sized between about 1 micron to about 50 microns, and a catalyst metal phase between about 8 percent by weight (wt.%) to about 25 percent by weight (wt.%). The diamond bodies are formed integrally to the substrate through a high pressure - high temperature sintering process as described herein during which catalyst diffuses into the diamond body and not only densifies the diamond body, but also serves to mechanically bond the diamond body to the substrate.

In some embodiments, a portion of the interstitial regions include a catalyst material or catalyst material sintering residue. In some embodiments, a portion of the interstitial regions are substantially free of catalyst material or catalyst material sintering residue. In some embodiments, the portion of the diamond body including interstitial regions substantially free of catalyst material or catalyst material sintering residue, extends from the working surface into an interior volume of the diamond body.

The cutters described and disclosed herein can be incorporated in drilling tools used, for example, in drilling geological formations. Such drilling tools can incorporate flushing media supplied to the drill head to facilitate removing debris from the drilling zone as well as to remove heat from the drill head that is generated in the drilling operation. Examples of drilling tools include drag bits having polycrystalline diamond cutters arranged along a periphery region of a fin or blade,

### EXAMPLES

Reference Example 1: Sedimentation and Assembly Forming Method: 1) A tantalum cup was placed open-side-up in the bottom of a stoppered glass tube with an internal diameter approximately 0,010" larger than the outside diameter of the cup, and the tube was clamped to a ring stand; the glass tube with rubber stopper and tantalum cup in the bottom is approximately 8 inches tall; 2) the tube was filled with ethanol to within approximately 1 inch of the top; 3) a pre-weighed measure of diamond blend powder designed to partially fill the tantalum cup upon completion of the sedimentation process is poured into the ethanol; 4) the tube is stoppered on the top, removed from the ring stand, and shaken to obtain a visually uniform diamond suspension; 5) the tube was then repositioned in the ring stand and not disturbed until the diamond grains have settled completely out of the liquid column, usually between 15 and 25 minutes, depending on the finest particle size of the diamond blend, the finer the finest size, the longer the sedimentation process time; 6) after the sedimentation process time is complete, the bottom stopper is carefully loosened sufficiently to permit the ethanol to pass by the cup and into a waste receptacle, without disturbing the diamond particles in the tantalum cup; 7) the filled tantalum cup is then recovered and placed under a heat lamp to completely dry the diamond bed; 8) a carbide substrate is then placed over the diamond bed and pressed down, followed by further assembly to complete the cup assembly for further processing, such as in a HPHT process.

Reference Example 2: Testing a Polycrystalline Cutter: Several cutters of the same style (Ref. No. BL412) were tested. Each cutter was placed into a holding fixture, dropped onto a strike plate, and the strike force which imparts a visually detectable crack in the diamond body of the cutter was determined. Typical cutters with monolayers, bi-layers, or tri-layers of differing particle size distributions typically crack at a force level of 7 to 24 units, depending on the design. The BL412 sedimentation-loaded cutters did not crack at 26, 32, and 44 units (3 different samples).

## Claims

1. A method of making a polycrystalline diamond cutter (560), comprising:
forming a diamond particle feed layer (463, 472, 482, 492) by
preparing a suspension (402, 422, 442, 476) of diamond particles in a liquid;
allowing sedimentation of suspended diamond particles; and
removing the liquid;
forming an assembly (460, 470, 480, 490), along an axis of symmetry (566) of the assembly comprising a refractory container (461, 471, 481, 491), the diamond particle feed layer, and a substrate (562); and
processing the assembly under high pressure high temperature (HPHT) sintering conditions from 5 GPa to 8 GPa and from 1300 °C to 1600 °C to sinter the diamond particle feed layer into a diamond body affixed to the substrate;
**characterised in that**:
a solid catalyst foil is positioned adjacent to the diamond particles, between the substrate and the diamond particles prior to the step of processing the assembly to sinter the diamond particle feed layer into a diamond body, the catalyst configured to sweep along an axis of the assembly through the diamond feed layer to contribute to attachment of the diamond body to the substrate;
a portion of the diamond feed layer comprises a plurality of diamond particles arranged according to a gradient along a radius (570) originating at the axis of symmetry (566) such that a majority of diamond particles in a region (568) radially closer to the axis of symmetry (566) have higher average sizes or average diameters comparative to a majority of diamond particles in a region (567) radially closer to a side working surface (565) having lower average sizes or average diameters such that the gradient of particle size decreases in a radial direction from the axis of symmetry (566) toward the working surface (565).

2. The method of claim 1, further comprising contacting the suspension of diamond particles with a baffle by pouring the suspension of diamond particles into the baffle (420, 443).

3. The method of claim 2, wherein the baffle (443) directs a portion of the suspension of diamond particles toward a central region (446) of the refractory container (441).

4. The method of claim 1, wherein the step of forming the diamond particle feed layer includes subjecting the suspension of sedimented diamond particles to a vibration.

5. The method of claim 1, wherein the liquid comprises an alcohol.

6. The method of claim 5, wherein the alcohol is ethanol.

## Patentansprüche

1. Ein Verfahren zur Herstellung eines polykristallinen Diamantschneiders (560), das Folgendes beinhaltet:
Bilden einer Diamantpartikel-Zufuhrschicht (463, 472, 482, 492) durch Folgendes:
Herstellen einer Suspension (402, 422, 442, 476) von Diamantpartikeln in einer Flüssigkeit;
Ermöglichen der Sedimentation von suspendierten Diamantpartikeln; und
Entfernen der Flüssigkeit;
Bilden einer Anordnung (460, 470, 480, 490) entlang einer Symmetrieachse (566) der Anordnung, die einen feuerfesten Behälter (461, 471, 481, 491), die Diamantpartikel-Zufuhrschicht und ein Substrat (562) beinhaltet; und
Verarbeiten der Anordnung unter Hochdruck-Hochtemperatur(HPHT)-Sinterbedingungen von 5 GPa bis 8 GPa und von 1300 °C bis 1600 °C, um die Diamantpartikel-Zufuhrschicht zu einem an dem Substrat befestigten Diamantkörper zu sintern;
**dadurch gekennzeichnet, dass**:
eine feste Katalysatorfolie angrenzend an die Diamantpartikel zwischen dem Substrat und den Diamantpartikeln vor dem Schritt des Verarbeitens der Anordnung positioniert wird, um die Diamantpartikel-Zufuhrschicht zu einem Diamantkörper zu sintern, wobei der Katalysator konfiguriert ist, um entlang einer Achse der Anordnung durch die Diamantzufuhrschicht zu streichen, um zur Befestigung des Diamantkörpers an dem Substrat beizutragen;
ein Abschnitt der Diamantzufuhrschicht eine Vielzahl von Diamantpartikeln beinhaltet, die gemäß einem Gradienten entlang eines Radius (570) angeordnet sind, der von der Symmetrieachse (566) ausgeht, sodass eine Mehrheit von Diamantpartikeln in einem Bereich (568), der radial näher an der Symmetrieachse (566) liegt, höhere durchschnittliche Größen oder durchschnittliche Durchmesser aufweist, verglichen mit einer Mehrheit von Diamantpartikeln in einem Bereich (567), der radial näher an einer seitlichen Arbeitsfläche (565) liegt, die geringere durchschnittliche Größen oder durchschnittliche Durchmesser aufweist, sodass der Gradient der Partikelgröße in einer radialen Richtung von der Symmetrieachse (566) zu der Arbeitsfläche (565) hin abnimmt.

2. Verfahren gemäß Anspruch 1, das ferner das Inkontaktbringen der Suspension von Diamantpartikeln mit einer Ablenkplatte durch Gießen der Suspension von Diamantpartikeln in die Ablenkplatte (420, 443) beinhaltet.

3. Verfahren gemäß Anspruch 2, wobei die Ablenkplatte (443) einen Abschnitt der Suspension von Diamantpartikeln zu einem zentralen Bereich (446) des feuerfest hergestellten Behälters (441) leitet.

4. Verfahren gemäß Anspruch 1, wobei der Schritt des Bildens der Diamantpartikel-Zufuhrschicht das Aussetzen der Suspension von sedimentierten Diamantpartikeln einer Vibration umfasst.

5. Verfahren gemäß Anspruch 1, wobei die Flüssigkeit einen Alkohol beinhaltet.

6. Verfahren gemäß Anspruch 5, wobei der Alkohol Ethanol ist.

## Revendications

1. Un procédé de fabrication d'un dispositif de coupe à diamant polycristallin (560), comprenant :
la formation d'une couche d'alimentation en particules de diamant (463, 472, 482, 492) par
la préparation d'une suspension (402, 422, 442, 476) de particules de diamant dans un liquide ;
le fait de permettre la sédimentation de particules de diamant mises en suspension ; et
le retrait du liquide ;
la formation d'un ensemble (460, 470, 480, 490), le long d'un axe de symétrie (566) de l'ensemble comprenant un récipient réfractaire (461, 471, 481, 491), la couche d'alimentation en particules de diamant, et un substrat (562) ; et
le traitement de l'ensemble dans des conditions de frittage à haute pression/haute température (HPHT) allant de 5 GPa à 8 GPa et de 1 300 °C à 1 600 °C pour fritter la couche d'alimentation en particules de diamant en un corps de diamant fixé au substrat ;
**caractérisé en ce que** :
une feuille de catalyseur solide est positionnée de manière adjacente aux particules de diamant, entre le substrat et les particules de diamant, avant l'étape de traitement de l'ensemble pour fritter la couche d'alimentation en particules de diamant en un corps de diamant, le catalyseur étant configuré pour se propager le long d'un axe de l'ensemble à travers la couche d'alimentation en diamant pour contribuer à l'assujettissement du corps de diamant au substrat ;
une portion de la couche d'alimentation en diamant comprend une pluralité de particules de diamant agencées selon un gradient le long d'un rayon (570) émanant au niveau de l'axe de symétrie (566) de telle sorte qu'une majorité de particules de diamant dans une région (568) radialement plus proche de l'axe de symétrie (566) ont des tailles moyennes ou des diamètres moyens plus élevés par comparaison avec une majorité de particules de diamant dans une région (567) radialement plus proche d'une surface de travail latérale (565) ayant des tailles moyennes ou des diamètres moyens plus petit(e)s de telle sorte que le gradient de taille de particule diminue dans une direction radiale allant de l'axe de symétrie (566) vers la surface de travail (565).

2. Le procédé de la revendication 1, comprenant en outre la mise en contact de la suspension de particules de diamant avec un déflecteur par versement de la suspension de particules de diamant dans le déflecteur (420, 443).

3. Le procédé de la revendication 2, dans lequel le déflecteur (443) dirige une portion de la suspension de particules de diamant vers une région centrale (446) du récipient réfractaire (441).

4. Le procédé de la revendication 1, dans lequel l'étape de formation de la couche d'alimentation en particules de diamant inclut le fait de soumettre la suspension de particules de diamant sédimentées à une vibration.

5. Le procédé de la revendication 1, dans lequel le liquide comprend un alcool.

6. Le procédé de la revendication 5, dans lequel l'alcool est l'éthanol.
